# EUROPÄISCHE PATENTSCHRIFT

(11) **EP 2 933 507 B1**
(45) Veröffentlichungstag und Bekanntmachung des Hinweises auf die Patenterteilung: **12.06.2019**
(21) Anmeldenummer: 15163854.1
(22) Anmeldetag: 16.04.2015
(51) Int. Cl.: F16B 12/24, F16B 12/26, F16B 12/46, E06B 3/984, F16B 12/12, E06B 3/964, F16B 5/00, F16B 13/12

(54) **STOSSVERBINDUNGSANORDNUNG, FENSTER-/TÜRRAHMEN ODER FENSTER-/TÜRFLÜGELRAHMEN SOWIE RAHMENPROFILELEMENT**
BUTT JOINT STRUCTURE, WINDOW/DOOR FRAME OR WINDOW/DOOR WING FRAME AND FRAME PROFILE ELEMENT
SYSTÈME DE JOINT EN BOUT, ENCADREMENT DE FENÊTRE/DE PORTE OU ENCADREMENT DE VANTAIL DE PORTE/DE FENÊTRE ET ÉLÉMENT DE PROFILÉ D'ENCADREMENT

(30) Priorität: 16.04.2014 DE 102014207322
(43) Veröffentlichungstag der Anmeldung: 21.10.2015
(73) Patentinhaber: Kneer, Ingo, 88521 Ertingen (DE)
(72) Erfinder: Kneer, Ingo, 88521 Ertingen (DE)
(74) Vertreter: Isarpatent

(56) Entgegenhaltungen:
- EP-A2- 2 226 457
- DE-A1-102012 009 035
- GB-A- 2 240 744

## Beschreibung

### GEBIET DER ERFINDUNG

Die vorliegende Erfindung betrifft eine Stoßverbindungsanordnung sowie einen Fenster-/Türrahmen oder Fenster-/Türflügelrahmen mit einer solchen Stoßverbindungsanordnung und ein Rahmenprofilelement für einen solchen Fenster-/Türrahmen oder Fenster-/Türflügelrahmen.

### TECHNISCHER HINTERGRUND

Stoßverbindungsanordnungen für Fensterrahmen bzw. Türrahmen oder Fensterflügelrahmen bzw. Türflügelrahmen existieren in verschiedensten Ausführungsformen. Insbesondere bei Holzfenstern handelt es sich dabei bisweilen zumeist um sogenannte Zapfenverbindungen, bei welchen ein Fortsatz oder ein separates Verbindungsstück in Ausnehmungen der Rahmenteile eingepresst und darin verleimt oder anderweitig befestigt wird.

Eine Zapfenverbindung ist beispielsweise in der DD 210 324 A1 beschrieben. Die Zapfenverbindung weist demnach einen kreiszylindrischen Verbindungszapfen auf, der in an den Anschlussflächen der zu fügenden Elementarteile des Rahmens vorgesehene Bohrungen eingeführt wird. Der Verbindungszapfen wird mittels Spannbolzen, die in Querbohrungen durch die Elementarteile des Rahmens und den Verbindungszapfen eingesetzt werden, in der Bohrung verspannt.

Bei Zapfenverbindungen für Holzfenster bestehen besondere Anforderungen an den Holzschutz. Daher sind in der Regel Wetterschutzbeschichtungen bzw. Lackbeschichtungen vorgesehen, die zur Konservierung des Holzwerkstoffes dienen. Derartige Lackbeschichtungen sollten für eine optimale Langlebigkeit des Holzfensters nach der Fertigung unverletzt sein.

Die Anforderung des Holzschutzes bereitet bei der Herstellung einer Stoßverbindung jedoch bisweilen einen erhöhten Herstellungsaufwand. Nach dem Fügen sind dazu oftmals noch zusätzliche Lackierschritte an dem komplett zusammengefügten und daher schwierig zu handhabenden Rahmen durchzuführen. Dies hat zusätzlich den Nachteil, dass bei Verzug des naturgemäß arbeitenden Holzwerkstoffes Risse in der außen aufgebrachten Lackschicht entstehen können, insbesondere an den Stoßfugen.

Zur Optimierung des Herstellungsprozesses und der Langlebigkeit werden daher für die Montage oftmals auch bereits vorlackierte Einzelteile verwendet. Diese sind einzeln zum einen einfacher zu lackieren als der gesamte Rahmen und weisen zudem jedes für sich selbst eine komplette Lackversiegelung, insbesondere auch an den Fügebereichen, auf. Beim Fügen von vorlackierten Teilen besteht jedoch die Problematik, dass die bestehende Lackschicht im Fügebereich verletzt wird. Die Verletzung kommt beispielsweise durch die Kraftaufbringung zum Fügen der Teile und/oder durch Reibungen der Zapfen an den Ausnehmungen bzw. an Wänden der Bohrungen beim Einführen zustande. Die Zapfen werden üblicherweise in die Ausnehmungen eingepresst. Ferner sind die entsprechenden Passungen durch den Lack auch Ungenauigkeiten unterworfen. Letztlich entstehen daher beim Fügen starke Reibungen, sodass die Lackschicht oftmals lokal aufgebrochen und/oder abgeschert oder auf andere Weise verletzt wird.

Ähnliche Probleme treten bisweilen auch bei anderen Zapfenverbindungsarten auf. So werden bei sogenannten Schlitz-Zapfen-Verbindungen, wie sie beispielsweise in der DE 20 2007 019 400 U1 beschrieben sind, die Zapfen beim Fügen über eine relativ lange Strecke in die jeweiligen Schlitze hineingepresst, was ebenfalls starke Reibungen und an vorlackierten Teilen Verletzungen der Lackschicht mit den oben bereits dargestellten Folgen mit sich bringt.

DE 10 2012 009035 A1 offenbart eine Stoßverbindungsanordnung mit allen Merkmalen des Oberbegriffs des Anspruchs 1.

### ZUSAMMENFASSUNG DER ERFINDUNG

Vor diesem Hintergrund liegt der vorliegenden Erfindung die Aufgabe zugrunde, eine verbesserte Stoßverbindungsanordnung für Fenster-/Türrahmen oder Fenster-/Türflügelrahmen, insbesondere von Holzfenstern, anzugeben.

Erfindungsgemäß wird diese Aufgabe durch eine Stoßverbindungsanordnung mit den Merkmalen des Patentanspruchs 1 und/oder durch einen Fenster-/Türrahmen oder Fenster-/Türflügelrahmen mit den Merkmalen des Patentanspruches 12 und/oder durch ein Rahmenprofilelement mit den Merkmalen des Patentanspruchs 13 gelöst.

Die der vorliegenden Erfindung zugrunde liegende Erkenntnis/Idee besteht darin, notwendige Kraftaufbringung und Reibungskräfte beim Herstellen einer Stoßverbindung auf ein Minimum zu reduzieren, indem ein Steckverbindungselement bzw. eine Einsteckausnehmung mit einer sich in Steckrichtung verjüngenden Ausbildung versehen wird. Somit sind zum Einführen des Steckverbindungselements in die Einsteckausnehmung bis kurz vor erreichen der finalen Position keinerlei Kräfte notwendig. Reibungskräfte entstehen erst beim Herstellen des finalen Kraftschlusses, wenn sich das Steckverbindungselement bereits nahezu in seiner finalen Position befindet. Vorteilhaft kann somit eine Verletzung der Lackschicht von vorlackierten Rahmenprofilelementen beim Fügen derselben zumindest weitgehend bzw. vollständig vermieden werden.

Des Weiteren kann erfindungsgemäß eine form- und/oder kraftschlüssige Verbindung geschaffen werden, ohne dass dazu Hinterschnitte an den Fügeabschnitten notwendig sind. Durch die hinterschnittfreie Gestaltung der Fügeabschnitte können diese vorteilhaft einfach frontal ineinander gesteckt werden, insbesondere ohne dass sie dazu erst aneinander abgleiten müssen. Vorteilhaft ist so eine einfache Montage, insbesondere ohne dass dazu eine Presse notwendig ist, ermöglicht.

Die vorliegende Erfindung ermöglicht somit die Herstellung langlebigerer Fenster- oder Fensterflügelrahmen, da auch die Lackschicht an und in den Fügeabschnitten, insbesondere auch bei vorlackierten Teilen, unversehrt bleibt, was vorteilhaft einen optimalen Holzschutz bedeutet.

Das Steckverbindungselement kann in den ersten Fügeabschnitt integriert vorgesehen sein und sich vom Fügeabschnitt vorstehend verjüngen.

Ferner kann das Steckverbindungselement auch als separates Teil vorgesehen sein. Im Falle eines separaten Steckverbindungselements kann am ersten Fügeabschnitt eine zusätzliche Einsteckausnehmung vorgesehen sein. Insbesondere kann das separate Steckverbindungselement dann ein Zentrum mit maximaler Dicke aufweisen und sich von dort in beide Steckrichtungen des ersten und zweiten Fügeabschnitts verjüngen.

Insbesondere können das Steckverbindungselement und die Einsteckausnehmung im Stoß bzw. innerhalb der Stoßverbindungsanordnung versteckt bzw. von außen nicht sichtbar sein. Vorteilhaft wird somit eine ansprechende äußere Erscheinung der Stoßverbindung geschaffen.

Vorteilhafte Ausgestaltungen und Weiterbildungen ergeben sich aus den weiteren Unteransprüchen sowie aus der Beschreibung unter Bezugnahme auf die Figuren der Zeichnung.

Gemäß einer Ausführungsform ist das Steckverbindungselement als am ersten Fügeabschnitt vorgesehener Steckverbindungszapfen ausgebildet. Bevorzugt ist der Steckverbindungszapfen einteilig mit dem ersten Rahmenprofilelement ausgebildet. Somit ist kein zusätzliches Steckverbindungselement notwendig, was die Teileanzahl reduziert und die Montage vereinfacht. Die Rahmenprofilelemente können zum Fügen insbesondere ohne zusätzliche Verbindungselemente ineinander gesteckt werden. Dazu steht der Steckverbindungszapfen bevorzugt vor dem Fügeabschnitt vor und verjüngt sich nach vorne in Steckrichtung.

Gemäß einer weiteren Ausführungsform sind das Steckverbindungselement und die Einsteckausnehmung quer zur Steckrichtung länglich ausgebildet. Durch die längliche Ausbildung wird die Anlagefläche vergrößert, und somit vorteilhaft eine stabilere Steckverbindung geschaffen. Des Weiteren wird durch die längliche Ausbildung zusätzlich auch eine Verdrehsicherung bereitgestellt. Alternativ zu einer länglichen Ausbildung könnten auch mehrere einzelne Steckverbindungselemente und Einsteckausnehmungen in einer Reihe vorgesehen sein.

Gemäß einer bevorzugten Ausführungsform weist der zweite Fügeabschnitt eine weitere Einsteckausnehmung auf. Die Fügeabschnitte sind dann mittels zweier Steckverbindungselemente formschlüssig miteinander fügbar ausgebildet. Auf diese Weise wird ein besonders inniger Verbund zwischen den Rahmenprofilelementen bereitgestellt. Ferner wird die Maßhaltigkeit der Verbindung durch das Vorsehen zusätzlicher Anlageflächen erhöht. Die Fügeabschnitte sind bevorzugt durch gleichzeitiges Einführen der Steckverbindungselemente in die Einsteckausnehmungen des zweiten Fügeabschnitts miteinander fügbar. Alternativ oder zusätzlich zu einer weiteren Einsteckausnehmung am zweiten Fügeabschnitt könnte auch der erste Fügeabschnitt eine Einsteckausnehmung aufweisen. Sodann würde das Fügen durch gleichzeitiges Einführen der Steckverbindungselemente in die Einsteckausnehmungen des ersten und zweiten Fügeabschnitts erfolgen.

Gemäß einer bevorzugten Ausführungsform weisen die Einsteckausnehmungen eine gemeinsame Steckrichtung auf. Alternativ oder zusätzlich sind die Einsteckausnehmungen in einem Winkel zueinander ausgerichtet. Bevorzugt stehen die Einsteckausnehmungen dabei senkrecht zueinander. Durch die gemeinsame Steckrichtung wird gewährleistet, dass die Rahmenprofilelemente mit einem einzigen Fügevorgang bzw. einer einzigen Relativbewegung gefügt werden können. Der Winkel bewirkt dabei, dass die Steckverbindungselemente an verschieden ausgerichteten Seitenwänden der Einsteckausnehmungen abgleiten können. Somit wird die Maßhaltigkeit der Stoßverbindungsanordnung optimiert, weil die Rahmenprofilelemente so beim Fügen automatisch zueinander ausgerichtet werden. Durch die Verjüngung gleiten die Steckverbindungselemente sozusagen automatisch in die vorbestimmte Position innerhalb der Einsteckausnehmungen, so dass eine Positionierung der Rahmenprofilelemente zueinander erfolgt. Insbesondere wenn die Einsteckausnehmungen senkrecht zueinander ausgerichtet sind, erfolgt diese Positionierung sowohl in Quer- als auch in Längsrichtung.

Gemäß der Erfindung verjüngt sich das Steckverbindungselement in Steckrichtung stetig. In Frage kommen dabei kegelartige oder konusartig zulaufende Ausbildungen. Selbstverständlich kann die Ausbildung dabei auch stumpfartig, insbesondere kegel- oder konusstumpfartig, das heißt mit einem gekappten Ende ausgebildet sein. Dabei sind unterschiedliche Grundflächen der kegelartigen oder konusartigen bzw. kegel- oder konusstumpfartigen Ausbildung denkbar. Beispielsweise ist die Grundfläche rund oder als rechteck mit gerundeten Kanten vorgesehen. Im Falle eines länglichen Steckverbindungselements hat die kegel- oder konusstumpfartige Ausbildung eine entsprechend längliche Grundfläche. Je nach Ausbildung des Steckverbindungselementes kommen verschiedenste Zulaufwinkel der stetigen Verjüngung in Frage. Bei entsprechend hochgenauer Fertigung und dementsprechend harten Werkstoffen kommen schon Zulaufwinkel ab 0,01° in Frage. Eine stabile Verankerung des Steckverbindungselements in der Einsteckausnehmung kann bei Winkeln von bis zu 45° realisiert werden. In der Praxis gut umsetzbar sind Zulaufwinkel im Bereich von 0,5 bis 30°. Bevorzugte Zulaufwinkel liegen im Bereich zwischen 1 und 20°.

Gemäß der Erfindung ist die Einsteckausnehmung als sich zum Steckverbindungselement korrespondierend in Steckrichtung verjüngende Tasche ausgebildet. Diese weist einen Boden und umlaufende Seitenwände auf. Vorteilhaft kann somit am Boden der Tasche eine sogenannte Leimtasche vorgesehen werden, falls ein Verleimen der Fügeabschnitte beabsichtigt ist. Alternativ zu einer Tasche wäre auch eine sich zum Steckverbindungselement korrespondierend in Steckrichtung verjüngende Durchgangsöffnung im zweiten Rahmenprofilelement denkbar. Mit der sich in Steckrichtung verjüngenden Ausbildung wird die direkte Anlagefläche zwischen Steckverbindungselement und Einsteckausnehmung vergrößert. Somit kann vorteilhaft eine vergrößerte Abstützfläche zur Kraftaufnahme vorgesehen werden. Des Weiteren kann dadurch ein erhöhter Reib- bzw. Kraftschluss zwischen dem Steckverbindungselement und der Einsteckausnehmung bereitgestellt werden. Bei verleimten Stoßverbindungsanordnungen kann dabei zudem die notwendige Leimmenge verringert werden, weil weniger Hohlräume zwischen den Fügeabschnitten vorhanden sind, die üblicherweise mit Leim ausgefüllt werden.

Bei einer vorteilhaften Weiterbildung weist die Einsteckausnehmung eine Tiefe auf, die größer als die einsteckbare Länge des Steckverbindungselements vorgesehen ist. Auf diese Weise wird zum einen eine Doppelpassung verhindert und zum anderen vorteilhaft eine Leimtasche bereitgestellt, welche ein Ausgleichsvolumen für überschüssigen Leim bereitstellt. Vorteilhaft wird somit ein Austreten bzw. Herausquellen des Leims aus den Stoßfugen reduziert bzw. verhindert.

Gemäß einer bevorzugten Ausführungsform sind die Rahmenprofilelemente als lackierte Vollholzteile ausgebildet. Besonders bevorzugt handelt es sich um vollständig lackierte Vollholzteile, die insbesondere auch im Bereich der Fügeabschnitte vorlackiert sind. Derartige lackierte Vollholzteile weisen zum einen eine hohe Umweltverträglichkeit auf, zumal es sich bei dem Werkstoff um einen nachwachsenden Rohstoff handelt. Des Weiteren weisen sie aufgrund der vollständigen Lackierung gleichzeitig eine optimale Wetterfestigkeit auf. Zudem wird die Montage durch den Einsatz der vorlackierten Teile vereinfacht, weil nach dem Fügen keine Lackierschritte mehr notwendig sind. Somit können besonders umweltverträgliche und gleichzeitig wetterbeständige bzw. langlebige Stoßverbindungsanordnungen geschaffen werden, die besonders einfach und effizient zu Montieren sind.

Gemäß einer Ausführungsform weist das Steckverbindungselement umfänglich umlaufende Nuten auf. Alternativ oder zusätzlich kann auch die Einsteckausnehmung umfänglich umlaufende Nuten aufweisen. Dies ist besonders vorteilhaft wenn die Stoßverbindungsanordnung verleimt ausgeführt werden soll. Die umlaufenden Nuten bilden dann sogenannte Leimsperren, welche ein Ausgleichsvolumen für überschüssigen Leim im Stoßbereich bilden und somit ein Herausquellen des Leims aus den Fugen des Stoßes verhindern.

Gemäß einer weiteren Ausführungsform weisen das Steckverbindungselement und die Einsteckausnehmung zueinander korrespondierende Rastmittel auf. Vorteilhaft können somit die Rahmenprofilelemente auch ohne Leim miteinander befestigt werden. Jedoch können die Rastmittel auch bei verleimten Ausführungen vorteilhaft sein, weil die Rastmittel eine gewisse Vorspannkraft bzw. Haltekraft bereitstellen. Vorteilhaft kann somit auf den Einsatz von Klemmen bzw. Leimpressen zum Trocknen bzw. Aushärten des Leims verzichtet werden. Somit wird die Montage bzw. der Herstellungsprozess der Stoßverbindungsanordnung durch die Rastmittel - ob mit oder ohne Leim - vereinfacht. Des Weiteren wird dadurch auch eine etwaige Vor-Ort-Montage am Einbauort ermöglicht bzw. erleichtert.

Gemäß einer Ausführungsform sind die Rastmittel als umfänglich umlaufende Wulst und korrespondierende umfänglich umlaufende Nut ausgebildet. Beim Einrasten der Wulst in die Nut wird dabei eine Rastverbindung geschaffen. Es kann entweder die Wulst am Steckverbindungselement und die Nut in der Seitenwand der Einsteckausnehmung vorgesehen sein, oder umgekehrt. Wird die Stoßverbindungsanordnung nicht verleimt, so kann die Rastverbindung zwischen der Wulst und der Nut auch reversibel wieder geöffnet und geschlossen werden, falls eine die Rastkraft überwindende Kraft entgegen der Steckrichtung aufgebracht wird. Beispielsweise wäre es denkbar, auf diese Weise Fensterverglasungen auszutauschen, ohne dass dazu ein neuer Fensterflügelrahmen notwendig ist. Selbiges gilt selbstverständlich auch für Türflügelverglasungen. Alternativ oder zusätzlich kann als Rastmittel auch eine Tannenbaumverzahnung vorgesehen sein. Eine derartige Tannenbaumverzahnung ist am Steckverbindungselement in Steckrichtung zulaufend vorgesehen und weist eine Vielzahl von Rastzähnen auf, welche insbesondere auf einer bestimmten Höhe umlaufend um das Steckverbindungselement ausgebildet sind. Die Rastzähne können dabei Widerhaken ausbilden, welche sich in die Einstecköffnung hineinführen lassen und bei Bildung eines Kraftschlusses lokal in die Seitenwand oder in eigens dafür vorgesehene Nuten der Einsteckausnehmung eingreifen. Alternativ können in der Seitenwand der Einsteckausnehmung auch Gegenzähne oder entsprechende Gegenrastnuten vorgesehen sein. Ist der Kraft- bzw. Formschluss zwischen den Widerhaken und der Einsteckausnehmung einmal hergestellt, stützen sich diese an ihren entgegen der Einsteckrichtung orientierten Flächen ab, so dass ein Herausziehen des Steckverbindungselements bzw. eine Trennung der Stoßverbindung verhindert wird.

Bei einer bevorzugten Ausführungsform eines Rahmenprofilelements weist der erste Fügeabschnitt einen vorstehenden Steckverbindungszapfen auf, welcher sich in Steckrichtung verjüngt. Somit können mehrere Rahmenprofilelemente zur Bildung eines Fenster-/Türrahmens oder Fenster-/Türflügelrahmens aneinander gesteckt bzw. zusammengefügt werden. Die Steckrichtung kann dabei der Steckrichtung der Einsteckausnehmung am zweiten Fügeabschnitt entsprechen, jedoch nicht notwendigerweise. Beispielsweise ist die Steckrichtung der Einsteckausnehmung zur Bildung eines Eckstoßes eines rechteckigen Rahmens senkrecht zur Längsrichtung des Rahmenprofilelements orientiert, wohingegen die Steckrichtung des Steckverbindungszapfens der Längsrichtung des Rahmenprofilelements entspricht. Beim Zusammenstecken mehrerer Rahmenprofilelemente wird somit jeweils der erste Fügeabschnitt eines ersten Rahmenprofilelements mit dem zweiten Fügeabschnitt eines zweiten Rahmenprofilelements zu einem Eckstoß gefügt.

Denkbar wäre jedoch auch das Ineinanderstecken zweier Rahmenprofilelemente im Stumpfstoß. Beispielsweise könnte dies bei leicht gebogenen Rahmenprofilelementen zum Herstellen eines Rundfensters vorgesehen werden. In diesem Fall würde die Steckrichtung eines Fügeabschnitts stets der Längsrichtung des Rahmenprofilelements in dem jeweiligen Fügeabschnitt entsprechen.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNG

Die vorliegende Erfindung wird nachfolgend anhand der in den schematischen Figuren der Zeichnung angegebenen Ausführungsbeispiele näher erläutert. Es zeigen dabei:
- Fig. 1A, 1B: eine schematische Darstellung einer Stoßverbindungsanordnung gemäß einem ersten Ausführungsbeispiel;
- Fig. 2A, 2B: eine schematische Darstellung einer Stoßverbindungsanordnung gemäß einem zweiten Ausführungsbeispiel;
- Fig. 3: eine perspektivische Darstellung eines Fenster-/Türrahmens oder Fenster-/Türflügelrahmens mit einer Stoßverbindungsanordnung gemäß Fig. 2B;
- Fig. 4A, 4B: eine schematische Darstellung einer Stoßverbindungsanordnung gemäß einem dritten Ausführungsbeispiel;
- Fig. 5A, 5B: eine schematische Darstellung einer Stoßverbindungsanordnung gemäß einem vierten Ausführungsbeispiel;
- Fig. 6A, 6B: eine schematische Darstellung einer Stoßverbindungsanordnung gemäß einem fünften Ausführungsbeispiel.

Die beiliegenden Figuren der Zeichnung sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

### BESCHREIBUNG VON AUSFÜHRUNGSBEISPIELEN

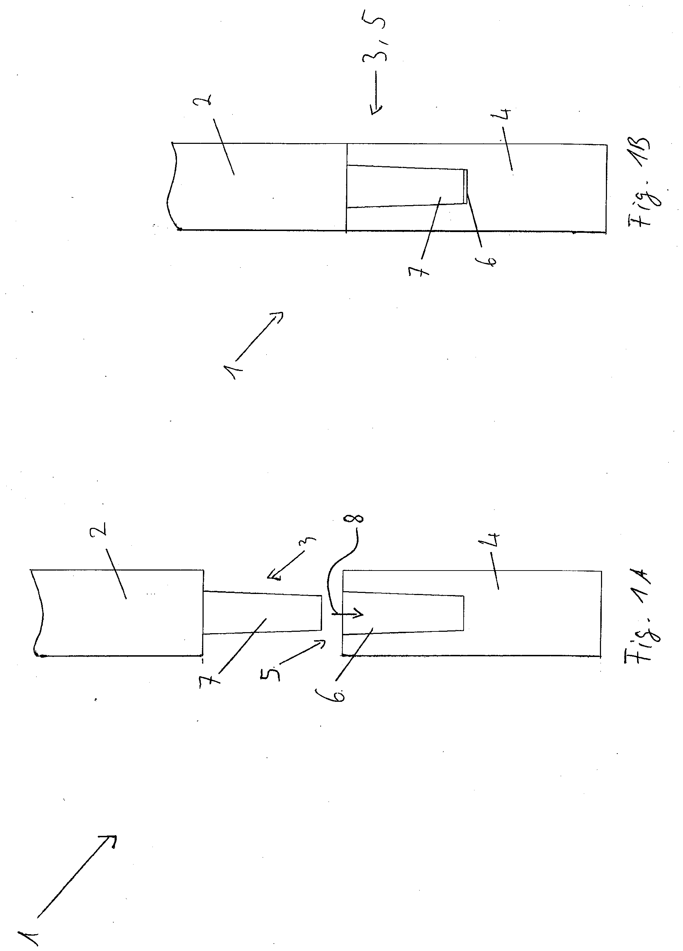

Figur 1A und 1B zeigen eine Stoßverbindungsanordnung gemäß einem ersten Ausführungsbeispiel. Die Darstellung ist als schematische Schnittdarstellung durch die Stoßverbindungsanordnung zu verstehen, wobei zur besserten Übersichtlichkeit auf Schraffuren verzichtet wurde.

Die Stoßverbindungsanordnung 1 weist ein erstes Rahmenprofilelement 2 und ein zweites Rahmenprofilelement 4 auf. Das erste Rahmenprofilelement 2 weist einen ersten Fügeabschnitt 3 auf, an welchem ein Steckverbindungszapfen 7 vorgesehen ist. Das zweite Rahmenprofilelement 4 weist einen zweiten Fügeabschnitt 5 auf, an welchem eine Einsteckausnehmung 6 vorgesehen ist.

Der Steckverbindungszapfen 7 weist eine sich in Steckrichtung 8 verjüngende Ausbildung auf. Beispielhaft ist der Steckverbindungszapfen 7 hier als einteilig mit dem ersten Rahmenprofilelement 2 ausgebildeter Kegelstumpf vorgesehen. Alternativ sind aber auch andere Ausführungen eines Steckverbindungselements denkbar, beispielsweise als ein in das erste Rahmenprofilelement ebenfalls einsteckbares Einzelteil mit zwei kegelstumpfförmigen Enden. Ferner sind auch andere zulaufende Formen, wie zum Beispiel eine Konusform mit geschwungener Mantelfläche, denkbar.

Die Einsteckausnehmung 6 ist als Tasche mit einem Boden und umlaufenden Seitenwänden mit einer zur Form des Steckverbindungszapfens korrespondierenden Form ausgebildet.

Figur 1A zeigt einen auseinandergezogenen Zustand der Rahmenprofilelemente 2, 4 vor dem Fügen bzw. Zusammenstecken in Steckrichtung 8. Figur 1B zeigt einen zusammengesteckten bzw. form- und/oder kraftschlüssig zusammengefügten Zustand der Rahmenprofilelemente 2, 4.

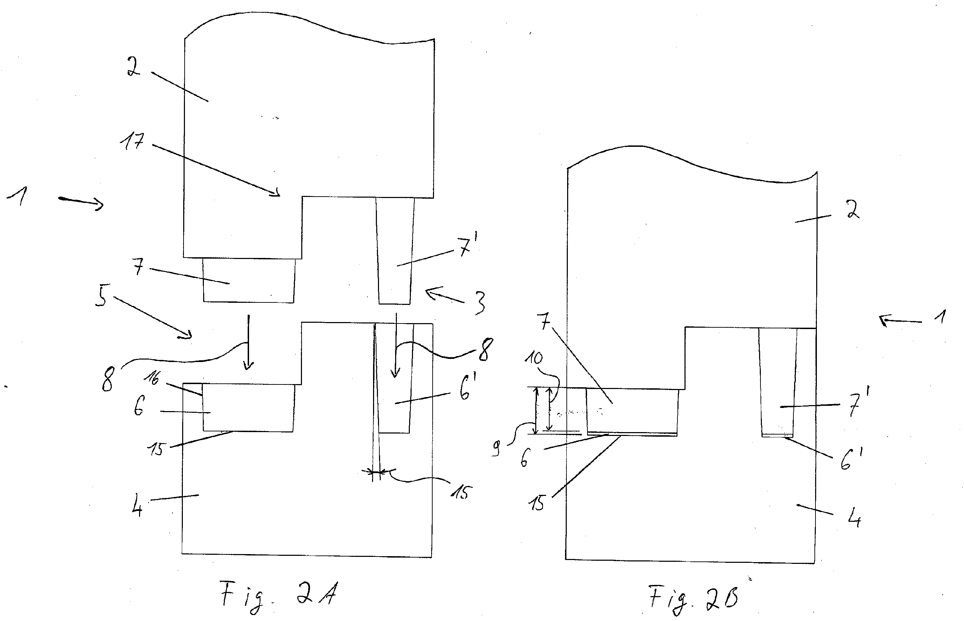

Die Figuren 2A und 2B zeigen eine schematische Darstellung einer Stoßverbindungsanordnung 1 gemäß einem weiteren Ausführungsbeispiel. Analog zur Darstellung in Figur 1A und 1B handelt es sich um eine schematische Schnittdarstellung, wobei auf Schraffuren zur besseren Übersichtlichkeit verzichtet wurde.

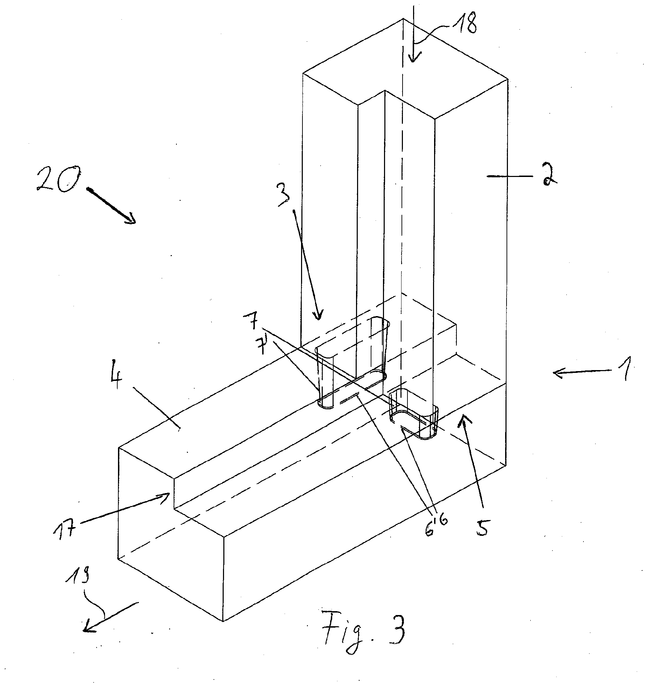

Im Unterschied zum ersten Ausführungsbeispiel weist die Stoßverbindungsanordnung 1 hier am ersten Fügeabschnitt zwei Steckverbindungszapfen 7 und 7' auf. Des Weiteren weist der erste Fügeabschnitt eine Stufe 17 auf, wobei der erste Steckverbindungszapfen 7 an einer in Steckrichtung 8 vorderen Stufenstirnfläche des Fügeabschnitts 3 vorgesehen ist und der zweite Steckverbindungszapfen 7' an einer durch die Stufe 17 zurückversetzten zweiten Stufenstirnfläche vorgesehen ist. Die Steckverbindungszapfen 7, 7' sind jeweils quer zur Steckrichtung 8 länglich ausgebildet. Sie sind ferner senkrecht zueinander angeordnet, worauf in Bezug auf Figur 3 noch näher eingegangen wird. In der dargestellten Schnittebene liegt der erste Steckverbindungszapfen 7 somit im Längsprofil, während der zweite Steckverbindungszapfen 7 im Querprofil dargestellt ist.

Am zweiten Rahmenprofilelement 4 ist der zweite Fügeabschnitt 5 korrespondierend zum ersten Fügeabschnitt 3 ausgebildet. Das heißt, hier ist eine erste Einsteckausnehmung 6 und eine zweite Einsteckausnehmung 7 vorhanden, wobei die Einsteckausnehmungen 6, 6' jeweils an einer vorderen und einer zurückversetzten Stufenstirnfläche des zweiten Fügeabschnitts 5 vorgesehen sind. Die Einsteckausnehmungen 6, 6' des zweiten Fügeabschnitts sind jeweils als Taschen ausgebildet und weisen einen Boden 15 sowie umlaufende Seitenwände 16 auf. Der Boden 15 ist in einer Tiefe 9 der Einsteckausnehmung 6 vorgesehen, welche größer als die einsteckbare Länge 10 des korrespondierenden Steckverbindungszapfens 7 ausgebildet ist. Ebenso verhält es sich mit der zweiten Einsteckausnehmung 6' und dem zweiten Steckverbindungszapfen 7'. Durch die größere Tiefe der Taschen wird am Boden derselben jeweils eine Leimtasche bereitgestellt. Diese fungiert als Ausgleichsvolumen für überschüssigen Leim, um beim Fügen ein Herausquellen von Leim aus den Fugen zu verhindern. Des Weiteren dient die größere Tiefe auch der Vermeidung eines Anschlags des Steckverbindungszapfens am Boden 15 der Tasche, um eine Doppelpassung zu verhindern.

Die Steckverbindungszapfen 7, 7' und die Einsteckausnehmungen 6, 6' verjüngen sich in Steckrichtung 8 sowohl in ihrer Breite als auch in ihrer Tiefe. Exemplarisch ist ein Zulaufwinkel 15 von etwa zwei bis vier Grad an der zweiten Einsteckausnehmung 6' eingezeichnet, welcher auf die erste Einstecköffnung 6 sowie die Steckverbindungszapfen 7, 7' übertragbar ist.

Figur 3 zeigt in perspektivischer Ansicht einen Fenster-/Türrahmen oder Fenster-/Türflügelrahmen mit einer Stoßverbindungsanordnung gemäß Figur 2B. Bei der Darstellung handelt es sich lediglich um einen Ausschnitt eines solchen Rahmens, wobei der Ausschnitt exemplarisch einen Eckstoß zeigt. Mit gestrichelten Linien sind jeweils verborgene Konturen dargestellt. Dies dient insbesondere zur Illustration der Ausbildung und Positionierung der ersten und zweiten Steckverbindungszapfen 7, 7' bzw. der ersten und zweiten Einsteckausnehmungen6, 6'.

Die erste Einsteckausnehmung 6 weist eine Längsausdehnungsrichtung auf, welche quer zur Längsrichtung 19 des zweiten Rahmenprofilelements 4 ausgerichtet ist. Die zweite Einsteckausnehmung 6' ist in ihrer Längsausdehnungsrichtung parallel zur Längsrichtung 19 des zweiten Rahmenprofilelements 4 ausgebildet. Die Einsteckausnehmungen 6, 6' stehen somit senkrecht zueinander.

Je nach Anwendung kann die Stufe 17 entweder zum Einsetzen einer Fensterverglasung bei einem Fenster-/Türflügelrahmen oder als Anschlag eines Fenster-/ oder Türrahmens dienen. Bei einem rechteckigen Rahmen sind insgesamt vier der dargestellten senkrechten Eckstöße mit entsprechenden Stoßverbindungen 1 vorgesehen, welche mit insgesamt vier Rahmenprofilelementen gebildet werden. Jedes der Rahmenprofilelemente 2, 4 weist demnach einen entsprechenden ersten Fügeabschnitt 3 mit Steckverbindungszapfen 7, 7' und einen zweiten Fügeabschnitt 5 mit Einsteckausnehmungen 6, 6' auf.

Die Steckrichtung der Einsteckausnehmungen 6, 6' steht dabei senkrecht zur Längsrichtung 18 bzw. 19 des jeweiligen Rahmenprofilelements 2 bzw. 4, wobei die Steckrichtung 8 der Steckverbindungszapfen 7, 7' der Längsrichtung 18 bzw. 19 des Rahmenprofilelements 2 bzw. 4 entspricht.

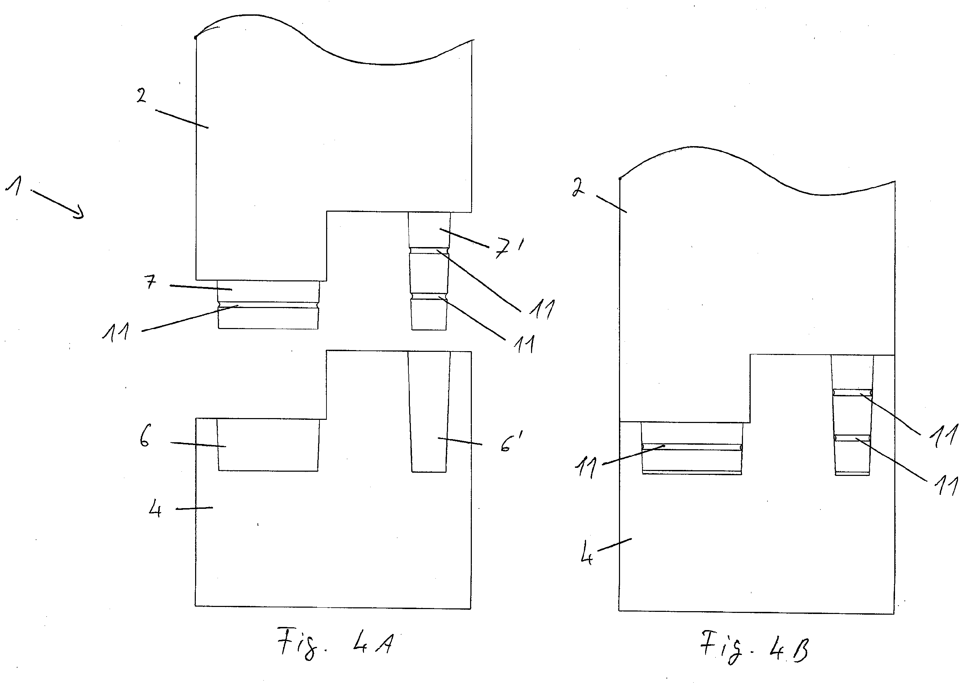

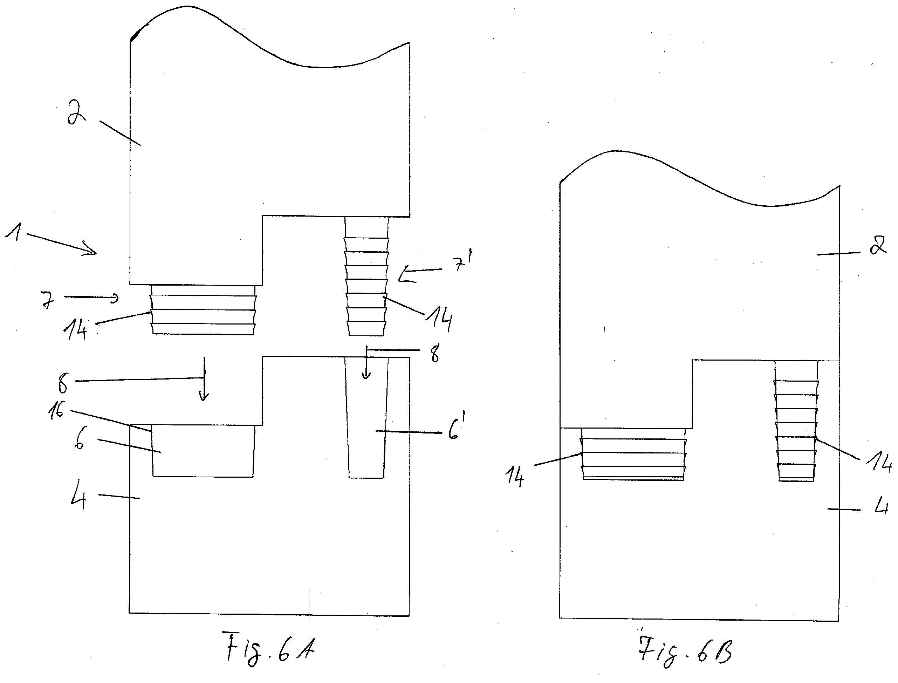

Die folgenden Ausführungsbeispiele der Figuren 4A, 4B bis 6A, 6B stellen Alternativen zu dem in Figur 2A und 2B gezeigten Ausführungsbeispiel dar. Sie sind analog zum zweiten Ausführungsbeispiel ebenso auf einen Fenster-/Türrahmen oder Fenster-/Türflügelrahmen 20 gemäß Figur 3 übertragbar.

Die Figuren 4A und 4B zeigen eine schematische Darstellung einer Stoßverbindungsanordnung gemäß einem dritten Ausführungsbeispiel. Im Unterschied zu dem zweiten Ausführungsbeispiel gemäß Figur 2A und 2B sind hier an dem Steckverbindungszapfen 7, 7' umlaufende Nuten 11 vorgesehen. Diese dienen als sogenannte Leimsperren, welche beim Fügen der Stoßverbindungsanordnung ein Ausgleichsvolumen für in den Fügeabschnitten überschüssig vorhandenen Leim zur Verfügung stellen. Dadurch wird ein Herausquellen des Leims aus den Fügeabschnitten beim Fügen verhindert.

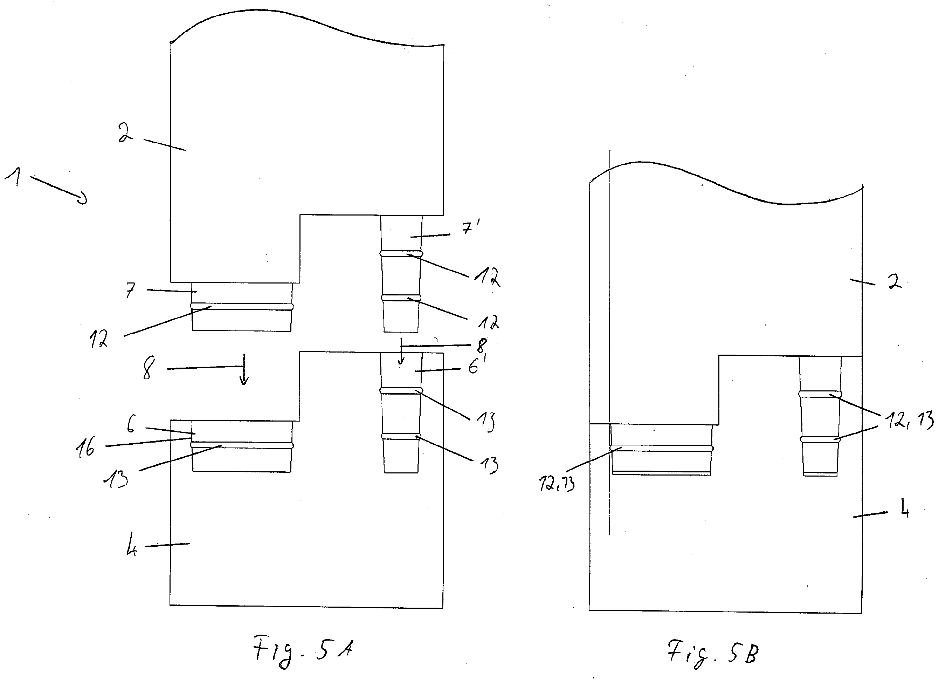

Die Figuren 5A und 5B zeigen eine schematische Darstellung einer Stoßverbindungsanordnung gemäß einem vierten Ausführungsbeispiel. Im Unterschied zu dem zweiten Ausführungsbeispiel gemäß Figur 2A und 2B sind die Fügeabschnitte hier mit Rastmitteln ausgebildet, welche in Form von an den Steckverbindungszapfen 7, 7' vorgesehenen umlaufenden Wülsten 12 und an den Innenwänden der Einsteckausnehmungen 6, 6' vorgesehenen korrespondierenden umlaufenden Nuten 13 ausgebildet sind.

Beim Fügen der Rahmenprofilelemente 2, 4 werden die Steckverbindungszapfen 7, 7' in die Einsteckausnehmungen 6, 6' eingeführt. Kurz vor Erreichen der finalen Position der Steckverbindungszapfen 7, 7' in den Einsteckausnehmungen 6, 6' liegen die Wülste 12 in einem Bereich, welcher kurz vor den korrespondierenden Nuten 13 liegt, an den Seitenwänden 16 der Einsteckausnehmungen 6, 6' an. Um die Steckverbindungszapfen 7, 7' in ihre finale Position zu bringen, muss dann eine Rastkraft in Steckrichtung 8 aufgebracht werden, welche die Wülste 12 und die Bereiche der Seitenwände 16 im Bereich der Nuten 13 elastisch verformt, sodass die Wülste 12 in die Nuten 13 hineingleiten und ein eingerasteter Zustand gemäß Figur 5B erreicht wird. In diesem eingerasteten Zustand sind die Wülste 12 und Nuten 13 dann, wie in Figur 5b dargestellt, ineinander verrastet.

Sofern beim Fügen kein Leim verwendet wird, ist diese Rastverbindung wieder reversibel trennbar, indem die Rastkraft durch eine entsprechende Zugkraft in entgegengesetzter Steckrichtung überwunden wird.

Die Figuren 6A, 6B zeigen schematisch eine Stoßverbindungsanordnung gemäß einem fünften Ausführungsbeispiel. Im Unterschied zum vierten Ausführungsbeispiel gemäß Figur 5A und 5B sind die Rastmittel hier als Tannenbaumverzahnung 14 ausgebildet. Die Tannenbaumverzahnung 14 ist an den sich verjüngenden Steckverbindungszapfen 7, 7' vorgesehen und mit umlaufenden Verzahnungen ausgebildet. Die umlaufenden Verzahnungen sind in sich ebenfalls verjüngender Weise an dem Steckverbindungszapfen 7, 7' angeordnet.

Beim Einführen der Steckverbindungszapfen 7, 7' in die Einsteckausnehmungen 6, 6' geraten die Zähne der Tannenbaumverzahnung 14 kurz vor Erreichen der finalen Position der Steckverbindungszapfen 7, 7'in Anlage mit den Seitenwänden 16. Zum Erreichen der finalen Position werden die Zähne der Tannenbaumverzahnung 14 und die Abschnitte der Seitenwände 16, an welchen die Zähne anliegen, durch Aufbringen einer Rastkraft in Steckrichtung 8 elastisch oder gegebenenfalls auch teilweise plastisch verformt, so dass sich die Zähne widerhakenartig in den Seitenwänden 16 verankern, wie in Figur 6B dargestellt. Die einmal derart gefügte Verbindung ist sodann nicht mehr zerstörungsfrei lösbar und insbesondere auch ohne Leim stabil. Das zusätzliche Vorsehen von Leim in den Fügeabschnitten ist dabei dennoch möglich.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar.

So ist die Stoßverbindungsanordnung grundsätzlich mit einer zusätzlichen Verleimung kombinierbar, sodass zusätzlich ein Stoffschluss entsteht.

Ferner können auch mehrere unterschiedliche Rastmittel und/oder eine Verleimung vorgesehen sein.

Des Weiteren ist es denkbar, den Steckverbindungszapfen alternativ oder zusätzlich mittels eines Befestigungsmittels in der Einsteckausnehmung zu fixieren, wobei das Befestigungsmittel quer durch das zweite Rahmenprofilelement hindurchgetrieben wird. Beispielsweise kann gegenüber und/oder seitlich der Einsteckausnehmung eine Schraube derart in das Rahmenprofil getrieben werden, dass sie sich in die Einsteckausnehmung und den Steckverbindungszapfen erstreckt und so den Steckverbindungszapfen in der Einsteckausnehmung fixiert.

Bei der Stoßverbindungsanordnung muss es sich nicht notwendigerweise um eine Eckstoßverbindung handeln. In Frage kommen vielmehr auch T-Stoßverbindungen oder Stumpfstoßverbindungen. Ferner sind auch Stoßverbindungen in anderen Winkelstellungen denkbar, die im Bereich zwischen 0 und 90° liegen, beispielsweise in einem 45° Winkel. Zudem kann es sich auch um einen Eckstoß handeln, bei welchem die Fügeabschnitte in einem 45° Winkel zur Längsrichtung der Rahmenprofilelemente ausgerichtet sind. Die Steckrichtung kann dabei entweder ebenfalls 45° zur Längsrichtung des Rahmenprofilelements ausgerichtet sein. Alternativ kann die Steckrichtung auch in einem 45°-Winkel zum Fügeabschnitt, das heißt dann wieder in Längsrichtung des Rahmenprofilelements oder senkrecht dazu ausgerichtet sein.

### Bezugszeichenliste

- 1: Stoßverbindungsanordnung
- 2, 4: Rahmenprofilelemente
- 3, 5: Fügeabschnitte
- 6, 6': Einsteckausnehmung
- 7, 7': Steckverbindungselement bzw. Steckverbindungszapfen
- 8: Steckrichtung
- 9: Tiefe
- 10: einsteckbare Länge
- 11: Nut
- 12: Wulst
- 13: Nut
- 14: Tannenbaumverzahnung
- 15: Boden
- 16: Seitenwand
- 17: Stufe
- 18, 19: Längsrichtungen der Rahmenprofilelemente
- 20: Fenster-/Türrahmen oder Fenster-/Türflügelrahmen

## Patentansprüche

1. Stoßverbindungsanordnung (1) für Fenster-/Türrahmen oder Fenster-/Türflügelrahmen, insbesondere von Holzfenstern/- türen, mit:
einem ersten Rahmenprofilelement (2), welches einen ersten Fügeabschnitt (3) aufweist, der an einem Ende des Rahmenprofilelements angeordnet ist; und
einem zweiten Rahmenprofilelement (4), welches einen zweiten Fügeabschnitt (5) mit einer Einsteckausnehmung (6) aufweist;
wobei der zweite Fügeabschnitt (5) mit dem ersten Fügeabschnitt (3) mittels eines Steckverbindungselements (7) form- und/oder kraftschlüssig fügbar ausgebildet ist, wobei das Steckverbindungselement (7) und die Einsteckausnehmung (6) eine sich in Steckrichtung (8) verjüngende Ausbildung aufweist, und **dadurch gekennzeichnet, dass**
das Steckverbindungselement (7) in Steckrichtung kegelartig, kegelstumpfartig, konusartig oder konusstumpfartig zuläuft.

2. Stoßverbindungsanordnung nach Anspruch 1,
**dadurch gekennzeichnet,**
**dass** das Steckverbindungselement (7) als am ersten Fügeabschnitt (3) vorgesehener Steckverbindungszapfen (7) ausgebildet ist, und insbesondere einteilig mit dem ersten Rahmenprofilelement (2) ausgebildet ist.

3. Stoßverbindungsanordnung nach Anspruch 1 oder 2,
**dadurch gekennzeichnet,**
**dass** das Steckverbindungselement (7) und die Einsteckausnehmung (6) quer zur Steckrichtung (8) länglich ausgebildet sind.

4. Stoßverbindungsanordnung nach Anspruch 3,
**dadurch gekennzeichnet,**
**dass** der zweite Fügeabschnitt (5) eine weitere Einsteckausnehmung (6') aufweist und die Fügeabschnitte (3, 5) mittels zweier Steckverbindungselemente (7, 7') formschlüssig miteinander fügbar ausgebildet sind.

5. Stoßverbindungsanordnung nach Anspruch 4,
**dadurch gekennzeichnet,**
**dass** die Einsteckausnehmungen (6, 6') eine gemeinsame Steckrichtung (8) aufweisen und/oder in einem Winkel zueinander, insbesondere senkrecht zueinander, ausgerichtet sind.

6. Stoßverbindungsanordnung nach einem der vorstehenden Ansprüche,
**dadurch gekennzeichnet,**
**dass** die Einsteckausnehmung (6) als sich zum Steckverbindungselement (7) korrespondierend in Steckrichtung (8) verjüngende Tasche ausgebildet ist.

7. Stoßverbindungsanordnung nach einem der vorstehenden Ansprüche,
**dadurch gekennzeichnet,**
**dass** die Einsteckausnehmung (6) eine Tiefe (9) aufweist, die größer als die einsteckbare Länge (10) des Steckverbindungselements (7) vorgesehen ist.

8. Stoßverbindungsanordnung nach einem der vorstehenden Ansprüche,
**dadurch gekennzeichnet,**
**dass** die Rahmenprofilelemente (2,4) als lackierte Vollholzteile ausgebildet sind.

9. Stoßverbindungsanordnung nach einem der vorstehenden Ansprüche,
**dadurch gekennzeichnet,**
**dass** das Steckverbindungselement (7) und/oder die Einsteckausnehmung (6) umfänglich umlaufende Nuten (11) aufweist.

10. Stoßverbindungsanordnung nach einem der vorstehenden Ansprüche,
**dadurch gekennzeichnet,**
**dass** das Steckverbindungselement (7) und die Einsteckausnehmung (6) zueinander korrespondierende Rastmittel (12,13; 14) aufweisen.

11. Stoßverbindungsanordnung nach Anspruch 10,
**dadurch gekennzeichnet,**
**dass** die Rastmittel als umfänglich umlaufende Wulst (12) und korrespondierende umfänglich umlaufende Nut (13) oder als Tannenbaumverzahnung (14) ausgebildet sind.

12. Fenster-/Türrahmen oder Fenster-/Türflügelrahmen (20), insbesondere für Holzfenster/-türen, mit einer Stoßverbindungsanordnung gemäß einem der vorstehenden Ansprüche.

13. Rahmenprofilelement (2; 4) für Fenster-/Türrahmen oder Fenster-/Türflügelrahmen, insbesondere für einen Fenster-/Türrahmen oder Fenster-/Türflügelrahmen gemäß Anspruch 12, mit:
einem ersten Fügeabschnitt (3), welcher an einem Ende des Rahmenprofilelements (2; 4) angeordnet ist;
einem zweiten Fügeabschnitt (5), welcher eine Einsteckausnehmung (6) aufweist, die sich in Steckrichtung (8) verjüngt, wobei die Einsteckausnehmung (6) als sich korrespondierend zu einem in Steckrichtung (8) kegelartig, kegelstumpfartig, konusartig oder konusstumpfartig zulaufenden Steckverbindungselement (7) verjüngende Tasche ausgebildet ist.

14. Rahmenprofilelement nach Anspruch 13,
**dadurch gekennzeichnet,**
**dass** der erste Fügeabschnitt (3) einen vorstehenden Steckverbindungszapfen (7) aufweist, welcher sich in Steckrichtung (8) verjüngt.

## Claims

1. Butt joint arrangement (1) for window frames/door frames or window leaf frames/door leaf frames, in particular of wooden windows/wooden doors, having:
a first frame profile element (2) that comprises a first joining section (3) that is arranged on an end of the frame profile element; and
a second frame profile element (4) that comprises a second joining section (5) having an insertion recess (6), wherein the second joining section (5) is configured so as to be able to join in a positive-locking manner and/or a non-positive locking manner to the first joining section (3) by means of a plug connecting element (7), wherein the plug connecting element (7) and the insertion recess (6) comprise a shape that tapers in the plugging direction (8), and
**characterised in that**
the plug connecting element (7) extends in the plugging direction in a tapered manner, in a truncated tapered manner, in a cone-shaped manner or in a truncated cone-shaped manner.

2. Butt joint arrangement according to claim 1,
**characterised in that**
the plug connecting element (7) is configured as a plug connecting pin (7) that is provided on the first joining section (3), and is configured in particular as a single part with the first frame profile element (2).

3. Butt joint arrangement according to claim 1 or 2,
**characterised in that**
the plug connecting element (7) and the insertion recess (6) are configured in an elongated manner transverse with respect to the plugging direction (8).

4. Butt joint arrangement according to claim 3,
**characterised in that**
the second joining section (5) comprises a further insertion recess (6') and the joining sections (3, 5) are configured so as to be able to join to one another in a positive locking manner by means of the two plug connecting elements (7, 7').

5. Butt joint arrangement according to claim 4,
**characterised in that**
the insertion recesses (6, 6') comprise a common plugging direction (8) and/or are oriented at an angle with respect to one another, in particular perpendicular to one another.

6. Butt joint arrangement according to any one of the preceding claims,
**characterised in that**
the insertion recess (6) is configured as a pocket that tapers in the plugging direction (8) corresponding to the plug connecting element (7).

7. Butt joint arrangement according to any one of the preceding claims,
**characterised in that**
the insertion recess (6) comprises a depth (9) that is provided as greater than the pluggable length (10) of the plug connecting element (7).

8. Butt joint arrangement according to any one of the preceding claims,
**characterised in that**
the frame profile elements (2, 4) are configured as coated solid wood parts.

9. Butt joint arrangement according to any one of the preceding claims,
**characterised in that**
the plug connecting element (7) and/or the insertion recess (6) comprises grooves (11) that extend around the periphery.

10. Butt joint arrangement according to any one of the preceding claims,
**characterised in that**
the plug connecting element (7) and the insertion recess (6) comprise latching means (12, 13; 14) that correspond to one another.

11. Butt joint arrangement according to claim 10,
**characterised in that**
the latching means are configured as a beading (12) that extends around the periphery and corresponding groove (13) that extends around the periphery or are configured as a pine tree interlocking arrangement (14).

12. Window frame/door frame or window leaf frame/door leaf frame (20), in particular for wooden windows/wooden doors, having a butt joint arrangement in accordance with any one of the preceding claims.

13. Frame profile element (2; 4) for window frames/door frames or window leaf frames/door leaf frames, in particular for a window frame/door frame or window leaf frame/ door leaf frame in accordance with claim 12, having:
a first joining section (3) that is arranged on one end of the frame profile element (2; 4);
a second joining section (5) that comprises an insertion recess (6) that tapers in the plugging direction (8), wherein the insertion recess (6) is configured as a pocket that tapers corresponding to a plug connecting element (7) that extends in the plugging direction (8) in a tapered manner, in a truncated tapered manner, in a cone-shaped manner or in a truncated cone-shaped manner.

14. Frame profile element according to claim 13,
**characterised in that**
the first joining section (3) comprises a protruding plug connecting pin (7) that tapers in the plugging direction (8) .

## Revendications

1. Dispositif d'assemblage bout à bout (1) pour cadre de fenêtre/porte ou cadre de battant de fenêtre/porte, en particulier pour fenêtres/portes en bois, comprenant :
un premier élément profilé de cadre (2) qui présente une première partie de jonction (3) disposée à une extrémité de l'élément profilé de cadre ; et
un deuxième élément profilé de cadre (4) qui présente une deuxième partie de jonction (5) munie d'un évidement d'enfichage (6) ;
la deuxième partie de jonction (5) étant conçue de manière à pouvoir être assemblée par complémentarité de forme et/ou par force à la première partie de jonction (3) au moyen d'un élément de liaison enfichable (7), l'élément de liaison enfichable (7) et l'évidement d'enfichage (6) présentant une forme qui se rétrécit dans la direction d'enfichage (8), et **caractérisé en ce que** l'élément de liaison enfichable (7) s'effile en forme de cône ou de tronc de cône dans la direction d'enfichage.

2. Dispositif d'assemblage bout à bout selon la revendication 1,
**caractérisé en ce**
**que** l'élément de liaison enfichable (7) est réalisé sous la forme d'un tenon de liaison enfichable (7) prévu sur la première partie de jonction (3) et est en particulier réalisé d'une seule pièce avec le premier élément profilé de cadre (2).

3. Dispositif d'assemblage bout à bout selon la revendication 1 ou 2,
**caractérisé en ce**
**que** l'élément de liaison enfichable (7) et l'évidement d'enfichage (6) sont de forme oblongue transversalement à la direction d'enfichage (8).

4. Dispositif d'assemblage bout à bout selon la revendication 3,
**caractérisé en ce**
**que** la deuxième partie de jonction (5) présente un autre évidement d'enfichage (6') et **en ce que** les parties de jonction (3, 5) sont conçues de manière à pouvoir être assemblées entre elles par complémentarité de forme au moyen de deux éléments de liaison enfichables (7, 7').

5. Dispositif d'assemblage bout à bout selon la revendication 4,
**caractérisé en ce**
**que** les évidements d'enfichage (6, 6') présentent une direction d'enfichage commune (8) et/ou sont orientés selon un angle l'un par rapport à l'autre, en particulier perpendiculairement l'un à l'autre.

6. Dispositif d'assemblage bout à bout selon l'une des revendications précédentes,
**caractérisé en ce**
**que** l'évidement d'enfichage (6) est réalisé sous la forme d'une cavité qui se rétrécit dans la direction d'enfichage (8) de manière correspondante à l'élément de liaison enfichable (7).

7. Dispositif d'assemblage bout à bout selon l'une des revendications précédentes,
**caractérisé en ce**
**que** l'évidement d'enfichage (6) présente une profondeur (9) qui est supérieure à la longueur enfichable (10) de l'élément de liaison enfichable (7).

8. Dispositif d'assemblage bout à bout selon l'une des revendications précédentes,
**caractérisé en ce**
**que** les éléments de profilé de cadre (2, 4) sont réalisés sous la forme de pièces en bois massif laquées.

9. Dispositif d'assemblage bout à bout selon l'une des revendications précédentes,
**caractérisé en ce**
**que** l'élément de liaison enfichable (7) et/ou l'évidement d'enfichage (6) présentent des rainures circonférentielles (11) .

10. Dispositif d'assemblage bout à bout selon l'une des revendications précédentes,
**caractérisé en ce**
**que** l'élément de liaison enfichable (7) et l'évidement d'enfichage (6) présentent des moyens d'encliquetage (12, 13 ; 14) mutuellement correspondants.

11. Dispositif d'assemblage bout à bout selon la revendication 10,
**caractérisé en ce**
**que** les moyens d'encliquetage sont réalisés sous la forme d'un bourrelet circonférentiel (12) et d'une rainure circonférentielle correspondante (13) ou sous la forme d'une denture étagée (14).

12. Cadre de porte/fenêtre ou cadre de battant de porte/fenêtre (20), en particulier pour portes/fenêtres en bois, avec un dispositif d'assemblage bout à bout selon l'une des revendications précédentes.

13. Élément profilé de cadre (2 ; 4) pour cadre de fenêtre/porte ou cadre de battant de fenêtre/porte, en particulier pour un cadre de fenêtre/porte ou un cadre de battant de fenêtre/porte selon la revendication 12, comprenant :
une première partie de jonction (3) qui est disposée à une extrémité de l'élément profilé de cadre (2 ; 4) ;
une deuxième partie de jonction (5) qui présente un évidement d'enfichage (6) qui se rétrécit dans la direction d'enfichage (8), l'évidement d'enfichage (6) étant réalisé sous la forme d'une cavité conique ou tronconique qui se rétrécit de manière correspondante à un élément de liaison enfichable (7) qui s'effile en forme de cône ou de tronc de cône dans la direction d'enfichage (8).

14. Élément profilé de cadre selon la revendication 13,
**caractérisé en ce**
**que** la première partie de jonction (3) présente un tenon de liaison enfichable (7) en saillie qui se rétrécit dans la direction d'enfichage (8).
